# EUROPEAN PATENT SPECIFICATION

(11) **EP 1 908 222 B1**
(45) Date of publication and mention of the grant of the patent: **03.02.2016**
(21) Application number: 06788300.9
(22) Date of filing: 24.07.2006
(51) Int. Cl.: H04L 12/413, H04B 3/54

(54) **FLEXIBLE SCHEDULING OF RESOURCES IN A NOISY ENVIRONMENT**
FLEXIBLE RESSOURCENKOORDINATION IN EINER VERRAUSCHTEN UMGEBUNG
PROGRAMMATION FLEXIBLE DE RESSOURCES DANS UN ENVIRONNEMENT SUJET AU BRUIT

(30) Priority: 27.07.2005 US 702717 P
(43) Date of publication of application: 09.04.2008
(73) Proprietor: Sigma Designs Israel S.D.I Ltd., 69710 Tel-Aviv (IL)
(72) Inventor: RIEDEL, Neal, Carlsbad, CA 92009 (US); PEPONIDES, Yiorgos, M., Encinitas, CA 92024 (US); PETRANOVICH, James, E., Lajolla, CA 92037 (US); YONGE, Lawrence, W., Ocala, FL 34480 (US); KATAR, Srinivas, Gainesville, FL 32608 (US); AYYAGARI, Deepak, Vancouver, WA 98684 (US); GAVETTE, Sherman, L., Camas, WA 98607 (US); CHAN, Wai, Chung Tony, Vancouver, WA 98683 (US)
(74) Representative: Vossius & Partner Patentanwälte Rechtsanwälte mbB
(86) International application number: PCT/US2006/028662
(87) International publication number: WO 2007/016031

(56) References cited:
- EP-A- 1 179 919
- US-A1- 2004 136 396
- US-A1- 2004 136 396
- US-A1- 2005 276 276
- US-A1- 2006 227 729
- US-B1- 6 587 474
- US-B1- 6 587 474

## Description

### 1. FIELD OF THE INVENTION

The present invention relates generally to communication over an Ethernet-Class network and, more specifically to communication over a power line network.

### 2. BACKGROUND ART

The vision of the networked home has driven many a business plan, but product offerings to date have been too limited in capability or in market potential to achieve the dream. Home networking is different than networking in the workplace. The applications are different, the traffic patterns are different, and the media available to carry the data are different. Certainly home networking users will want to transfer files between their computers and share peripherals such as printers. They will want gateways to broadband access so they can share their Internet connection between multiple devices. Users will also want other services, such as voice-over-IP (VoIP), streaming media for entertainment, and support for multi-player networked games.

While some newer houses are wired with cables suitable for Ethernet, most are not. Thus, if choices for home network physical media are limited to phone wiring, wireless, and power line, there are a mixed bag of attributes.

There has been a proliferation of wireless networking and related components in recent years. However, wireless communication suffers from limited range and less than universal coverage, i.e. certain areas of the home cannot communicate with others. These issues are particularly prominent in certain types of construction that result in poor signal propagation, such as those using steel frame and brick walls. Solutions to these issues are expensive and complex, and require some technical acumen not available to the average homeowner.

Although telephone line networking may at first appear to be a solution, many households lack phone jacks at convenient locations to achieve the foreseeable benefits of home networking. For instance, some older houses may only have one phone jack located in the kitchen for use in the kitchen and other living areas (e.g. living room, family room, etc). Thus, it may be inconvenient or messy to provide network connections to remote devices. This picture is particularly unfavorable in less developed countries. Power plugs, on the other hand, are located in almost every room in the home, and some homes have multiple power outlets located on every wall of every room. The power line appears to be the most difficult medium of these three for communication, but it does have two appealing attributes. First, as with phone lines, no RF conversion hardware is needed and, thus, the cost can be low compared to wireless solutions. But more importantly, power outlets are almost everywhere someone might want to use a networked device at home.

The power line medium is a harsh environment for communication. For instance, the channel between any two outlets in a home has the transfer function of an extremely complicated transmission line network with many unterminated stubs and some having terminating loads of varying impedance. Such a network has an amplitude and phase response that varies widely with frequency. At some frequencies the transmitted signal may arrive at the receiver with relatively little loss, while at other frequencies it may be driven below the noise floor. Worse, the transfer function can change with time. This might happen because the homeowner has plugged a new device into the power line, or if some of the devices plugged into the network have time-varying impedance. As a result, the transfer function of the channel between outlet pairs may vary over a wide range. In some cases, a broad swath of bandwidth may be suitable for high quality transmission, while in other cases the channel may have a limited capacity to carry data.

With many power outlets available for plugging in a new networked device at any time, the issues involving the management and coordination of the networked devices bring about concerns regarding the overall throughput of the network, Quality of Service (QoS) for each connection, authentication, coordination, and sharing of the network resources. Accordingly, there is a need in the art for management and coordination schemes that can effectively and efficiently address such concerns.
EP-A-1 179 919 discloses an access contention scheme having both multi-level priorities and a contention-free access indicator for use by a station in a network of stations.

US-A-7 623 542 discloses a method of operating in a network in which stations communicate over a shared medium. The method provides regularly repeated contention free intervals, CSMA communication during times outside the contention free intervals, and distributed control over the initiation and makeup of the contention free intervals to a plurality of stations so that any of the plurality of stations can independently initiate transmission within the contention free interval.

US-A-6 587 474 describes a data bus which is shared by several components. The components possess a hierarchical transmission token and are synchronized by a synchronization pulse. A clock signal of the synchronization pulse has a rate which is between the duration of transmission of the component with the highest priority token and the cumulative duration of transmission of all components.

### SUMMARY OF THE INVENTION

The present invention is defined in the attached independent claim. Further, preferred features may be found in the dependent claims appended hereto.

Other features and advantages of the present invention will become more readily apparent to those of ordinary skill in the art after reviewing the following detailed description and accompanying drawings.

### BRIEF DESCRIPTION OF THE DRAWINGS

The features and advantages of the present invention will become more readily apparent to those ordinarily skilled in the art after reviewing the following detailed description and accompanying drawings, wherein:
FIG. 1 illustrates an overview of a HPAV (HomePlug Audio Video) system,
FIG. 2A illustrates a diagram of an exemplary powerline network configuration for the HPAV system in FIG. 1.
FIG. 2B illustrates a diagram of another exemplary powerline network configuration for the HPAV system in FIG. 1.
FIG. 2C illustrates a diagram of another exemplary powerline network configuration for the HPAV system in FIG. 1.
FIG 3 illustrates a diagram of an exemplary HPAV transceiver for HPAV system 100 in FIG. 1.
FIG 4 illustrates a diagram of an exemplary beacon period.

### DETAILED DESCRIPTION OF THE INVENTION

Moreover, in the description of the present invention, certain details have been left out in order to not obscure the inventive aspects of the invention. The details left out are within the knowledge of a person of ordinary skill in the art.

The drawings in the present application and their accompanying detailed description are directed to merely example embodiments of the invention. To maintain brevity, other embodiments of the invention which use the principles of the present invention are not specifically described in the present application and are not specifically illustrated by the present drawings. It should be borne in mind that, unless noted otherwise, like or corresponding elements among the figures may be indicated by like or corresponding reference numerals.

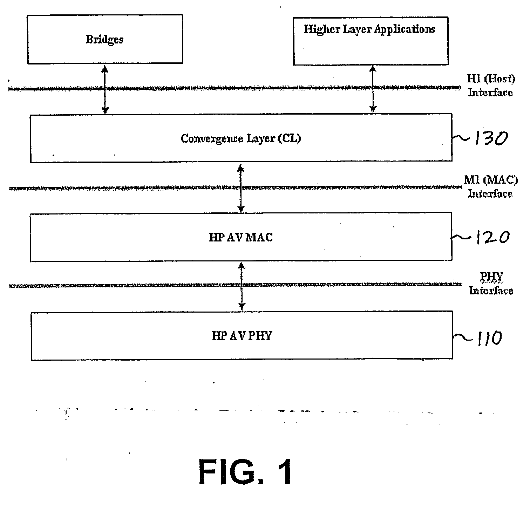

FIG. 1 illustrates an overview of HPAV (HomePlug Audio Video) system 100, according to one embodiment of the present application. As shown, HPAV system 100 includes PHY (Physical) layer 110, MAC (Media Access Control) layer 120 and convergence layer 130. When HPAV system 100 is in transmit mode, PHY layer 110 performs error-control correction, mapping into OFDM (Orthogonal Frequency Division Multiplexing) symbols, and generation of time-domain waveforms; MAC layer 120 determines the correct position of transmission, formats data frames into fixed-length entities for transmission on the channel and ensures timely and error-free delivery through Automatic Repeat Request (ARQ); and convergence layer 130 performs bridging, classification of traffic into connections, and data delivery smoothing functions. Conversely, when HPAV system 100 is in receive mode, PHY layer 110, MAC layer 120 and convergence layer 130 perform the corresponding functions in the reverse. { XE " System block diagram" }

HPAV system 100 utilizes OFDM modulation technique due to its inherent adaptability in the presence of frequency selective channels, its resilience to narrow band interference, and its robustness to impulsive noise. Through the use of time-domain pulse shaping of the OFDM symbols, deep frequency notches can be achieved without the additional requirement of transmit notch filters. HPAV system 100 employs 1155 carriers, in the range from 1.80 MHz to 30.00 MHz.

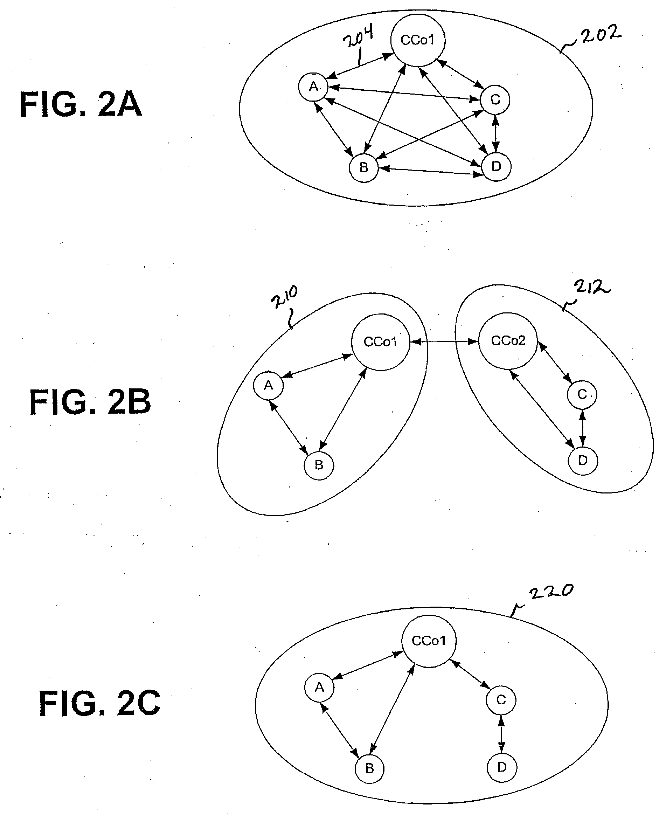

FIG. 2A illustrates an exemplary Audio Video Logical Network (AVLN) for HPAV system 100 in FIG. 1. An AVLN comprises a set of stations or devices that have the same Network Membership Key (NMK). In an AVLN, which is also generally referred to as a "powerline network" in the present application, one of the stations or devices becomes the Central Coordinator (CCo) device, which is responsible for coordinating the transmissions of all of the stations in the network, in order to achieve maximum overall network throughput as well as good QoS for each connection. The CCo is also responsible for authenticating stations that wish to join the network, managing encryption keys, and coordinating sharing of resources with neighbor networks. A CCo can either be preconfigured as such or be automatically selected through a specified selection procedure; however, only one station in an AVLN can function as a Central Coordinator (CCo) at one time. It is noted that the stations in an AVLN (i.e. a powerline network) can communicate via a powerline (i.e. an AC line).

As shown in FIG. 2A, AVLN 202 includes stations A, B, C, and D and CCo1. The Physical Network (PhyNet) of a given station is the set of stations that can physically communicate with the station - at least at the level of Frame Control (FC) and ROBO (robust) mode. A PhyNet is relative to a given station, and it is possible for PhyNets of physically close-by stations to be distinct. In the present application, it is noted that a double arrow line, such as double arrow line 204 in FIG. 2A, indicates an ability for two stations, such as station A and CCo1, to communicate on the PHY level. Also shown in FIG. 2A, all stations can communicate with each other and, consequently, the PhyNet of all stations is the same set {A, B, C; D, CCo1}, as shown in Table 1. Two stations belonging to an AVLN can communicate with each other if they belong to each other's PhyNet. Further shown in FIG. 2A, AVLN 202 coincides with the PhyNet of each station in AVLN 202.

**Table 1**

| | **Physical Networks (PhyNets) in ...** | | |
|---|---|---|---|
| **Station** | **Figure 2A** | **Figure 2B** | **Figure 2C** |
| A | {A,B,C,D,CCo1} | {A,B,CCo1} | {A,B,CCo1} |
| B | {A,B,C,D,CCo1} | {A,B,CCo1} | {A,B,CCo1} |
| C | {A,B,C,D,CCo1} | {C.D,CCo2} | {C,D,CCo1} |
| D | {A,B,C,D,CCo1} | {C,D,CCo2} | {C,D} |
| CCo1 | {A,B,C,D,CCo1} | {A,B,CCo1,CCo2} | {A,B,C,CCo1} |
| CCo2 | N/A | {C,D,CCo1,CCo2} | N/A |

FIG. 2B illustrates two exemplary AVLNs for HPAV system 100 in Figure 1. As shown in FIG. 2B, AVLN 210 includes stations A and B and CCo1 and AVLN 212 includes CCo2 and stations C and D. The PhyNet for each station in FIG. 2B is shown in Table 1.

FIG. 2C illustrates an exemplary AVLN for HPAV system 100 in Figure 1. As shown in FIG. 2C, AVLN 220 includes CCo1 and stations A, B, C, and D. The PhyNet for each station in FIG. 2C is shown in Table 1.

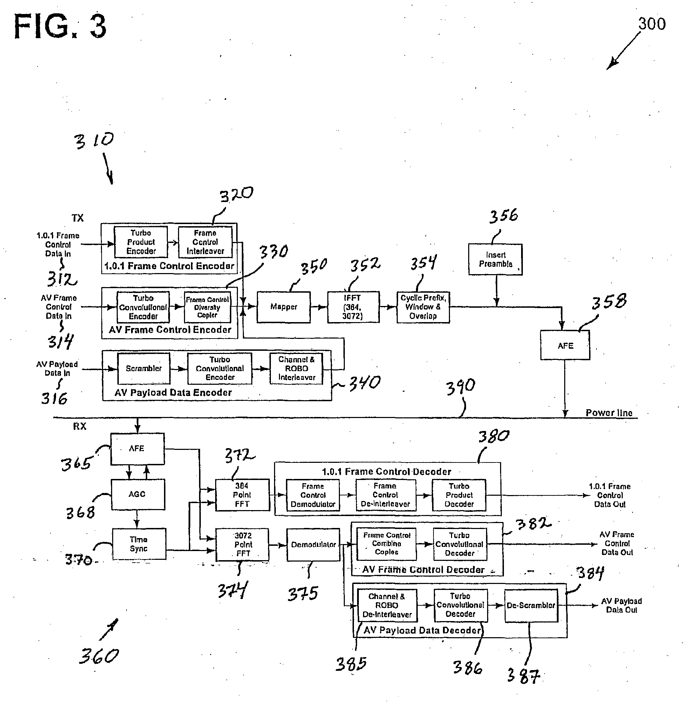

FIG. 3 shows a diagram of an exemplary HPAV transceiver for HPAV system 100 in FIG. 1. HPAV transceiver 300 includes transmitter side 310, which uses OFDM modulation, and receiver side 360. On transmitter side 310, the PHY layer (e.g. PHY layer 110 in Figure 1) receives its inputs from the MAC layer (e.g. MAC layer 120). Three separate processing chains are shown in FIG. 3 for different encoding for HomePlug 1.0.1 Frame Control (FC) data 312, HomePlug AV Frame Control data 314 and HomePlug AV Payload data 316, which are processed by 1.0.1 FC encoder 320, AV FC encoder 330 and AV payload data encoder 340, respectively. The outputs of the three encoders lead into a common OFDM modulation structure, including mapper 350, Inverse Fast Fourier Transform (IFFT) processor 352, cyclic prefix insertion, symbol window and overlap block 352, and preamble insertion 356, which eventually feeds Analog Front End (AFE) module 358 that couples the signal to power line medium 390.

At receiver side 360, AFE 365 operates with an Automatic Gain Controller (AGC) 368 and a time-synchronization module 370 to feed separate frame control and payload data recovery circuits. The frame control data is recovered by processing the received sample stream through 384-point FFT 372 for HomePlug 1.0.1 delimiters, and 3072-point FFT 374 for HomePlug AV, and through separate frame control decoders 380 and 382 for respective. HomePlug 1.0.1 and HomePlug AV modes. The payload portion of the sampled time domain waveform, which contains only HomePlug AV formatted symbols, is processed through 3072-point FFT 374, demodulator 375, and through de-interleaver 385, turbo convolutional decoder 386, and de-scrambler 387 of AV payload data decoder 384 to recover the AV payload data.

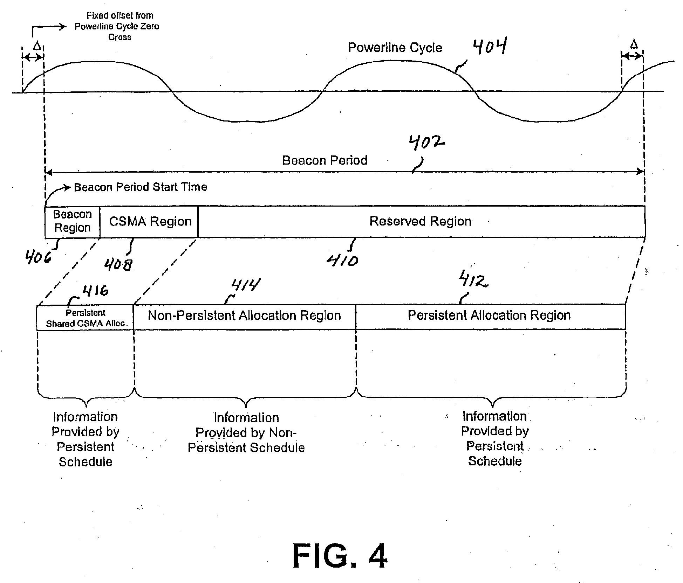

In the present invention, the CCo of a network (e.g. CCo1 of AVLN 202 in FIG. 2A) transmits a special signal called the beacon, which contains system-wide information, such as the network ID, the number of neighboring networks with which it coordinates, the current schedule of transmissions (e.g. which station is allowed to transmit and when), and the mode of the network (e.g. if it is in HPAV or in HPAV Hybrid mode). The beacon can also contain responses to messages from specific stations that request resources, request to join the network, or are delivered an encryption key, etc. The beacon is sent by the CCo at regular intervals that are tied to a specific phase of the power cycle, as discussed below in relation to FIG. 4. The beacon is transmitted in a so-called ROBO (Robust) mode, which is used for reliable reception of the beacon by other stations, where each station experiences a different channel characteristic from the CCo to the station. In the ROBO mode, modulation is independent of the characteristics of the channel, and robustness is achieved through low rate coding, low density modulation, and repetition and interleaving of the payload.

Each HPAV station (e.g. stations A, B, C, and D in FIG. 2A) monitors the channel for the presence of HP1.0 devices. When a station detects the presence of HP1.0 devices, it notifies the CCo (e.g. CC01 in FIG. 2A), which in turn switches the network (e.g. AVLN 202 in FIG. 2A) to the HPAV Hybrid mode. In the Hybrid mode operation, HPAV networks avoid interference from HP1.0 stations by coaxing the HP1.0 stations to transmit only in the CSMA/CA region of the beacon period. Thus HPAV stations and HP1.0 stations can coexist on the same medium, while HPAV stations maintain all the advantages of scheduled transmissions in the contention-free portion of the period.

FIG. 4 illustrates an exemplary beacon period synchronized to an exemplary powerline cycle, according to one example of the present invention. As shown in FIG. 4, beacon period 402 (i.e. the time between two consecutive beacon transmissions) is substantially equal to two periods of powerline cycle 404. For example, for a powerline frequency of 60 Hz (i.e. for a 60 Hz system), the beacon period is nominally equal to 33.33 milliseconds (ms). For example, for a powerline frequency of 50 Hz (i.e. for a 50 Hz system), beacon Period 402 is nominally equal to 40 ms. In one example, beacon period 402 can be precisely equal to two periods of powerline cycle 404. As further shown in FIG. 4, the start of beacon period 402 can be offset from the start of a powerline cycle by a fixed duration.

As also shown in FIG. 4, beacon period 402 includes beacon region 406, CSMA (Carrier Sense Multiple Access) region 408, and reserved region 410. Beacon region 406 includes the beacon, which is generated by a CCo and can include a Preamble, a Frame Control, and a beacon payload. The CCo ensures that the beacon remains synchronized to the powerline cycle, independent of the CCo local clock frequency.

Information describing allocations within beacon period 402 is broadcast in the beacon payload by using one or more beacon entries. Beacon region 406 also includes information regarding the duration of CSMA region 408 and reserved region 410. CSMA region 408 includes persistent shared CSMA allocation region 416, which is allocated to connections (i.e. sessions between transmitting and receiving stations) that use CSMA channel-access mechanism. Reserved region 410, which is the section of beacon period 402 during which only one station has permission to transmit, is further divided into persistent allocation region 412 and non-persistent allocation region 414. Persistent allocation region 412 is allocated to connections (i.e. sessions between transmitting and receiving stations), where the connections require QoS (Quality of Service). Non-persistent allocation region 414 is allocated to one or more of the following:
(a) active connections that have allocation in persistent allocation region 412 but may need extra capacity, either because the channel has deteriorated for a brief or longer period of time, or because the requirements of a particular application have increased (e.g. during video or audio fast forward);
(b) an additional CSMA period (e.g. when the CCo senses high level of collisions in the regular CSMA period; and
(c) special system needs, such as a discover beacon, whose purpose is to discover hidden nodes (i.e. stations) that cannot detect or hear the CCo.

The allocations in persistent allocation region 412 and the allocations in persistent shared CSMA allocation region 416 are controlled by a "Persistent Schedule," and the allocations in non-persistent allocation region 414 are controlled by a "Non-persistent Schedule." Both the Persistent Schedule and the Non-persistent Schedule are included in Broadcast messages in the beacon. The Persistent Schedule is valid for the current beacon period as well as for a number of subsequent beacon periods, where the number of subsequent beacon periods is indicated in the beacon. Since the Persistent Schedule remains valid for a number of subsequent beacon periods, it (i.e. the Persistent Schedule) allows all of the stations (e.g. stations A, B, C, and D in FIG. 2A) in the network (e.g. AVLN 202 in Figure 2A) to know the schedule, even if they occasionally fail to receive the beacon.

In addition to the Persistent Schedule, the system (e.g. HPAV system 100 in Figure 1) can support a Preview Schedule, which provides a preview of the next schedule. Thus, when a schedule change is necessary, the new schedule can be announced before it actually takes effect. The beacon can utilize a counter to indicate how many beacon periods will pass before the new schedule takes effect, for example. The Preview Schedule also allows some stations to miss beacon reception without losing schedule information.

In contrast to the Persistent Schedule, the Non-persistent Schedule is valid only for the beacon period in which it is announced. Consequently, if a station does not receive the beacon in a certain period, the station simply does not use any portion of non-persistent allocation region 414 during that period. On the other hand, when a station does receive the current beacon, it (i.e. the station) can take advantage of any allocation in non-persistent allocation region 414, either for its own use, or for the benefit of the system as a whole (e.g. in the form of the discover beacon).

The Persistent and Non-persistent Schedules advantageously allow a more reliable distribution of the schedule in an unreliable medium, while at the same time allowing a swift reaction to rapidly changing conditions, or implementation of system functions without specific allocation of resources to such functions.

Thus, as discussed above, the present invention provides an HPAV system including stations that communicate via a powerline in a powerline network, where one of the stations, which is designated as a CCo (Central Coordinator), generates a beacon that is synchronized to the powerline and includes Persistent and Non-persistent Schedules. As a result, the present invention achieves an HPAV system that advantageously provides flexible scheduling of resources in a powerline network environment.

From the above description of the invention it is manifest that various techniques can be used for implementing the concepts of the present invention without departing from its scope. Moreover, while the invention has been described with specific reference to certain embodiments, a person of ordinary skill in the art would recognize that changes could be made in form and detail without departing from the scope of the invention. For example, it is contemplated that the circuitry disclosed herein can be implemented in software and/or hardware, and the software may be stored in any storage medium or memory. The described embodiments are to be considered in all respects as illustrative and not restrictive. It should also be understood that the invention is not limited to the particular embodiments described herein, but is capable of many rearrangements, modifications, and substitutions without departing from the scope of the invention.

## Claims

1. A method for coordinating transmissions on a centrally coordinated powerline network (202, 210, 212, 220), said method comprising:
transmitting beacons by a central coordinator (CCo1, CCo2) to a plurality of stations (A, B, C, D) to define beacon periods (402) beginning at pre-defined phases of a powerline cycle (404), wherein said beacons contain at least transmission schedules for at least said beacon periods (402);
wherein said transmission schedules contain allocations fixed in phase relative to the powerline cycle (404);
and **characterized in that** said beacon transmissions include a persistent schedule (412, 416) valid for a current beacon period (402) and a number of subsequent beacon periods (402) defining the schedule of transmissions which said plurality of stations (A, B, C, D) follow, at least when one or more beacons of said subsequent beacon periods (402) are not received by at least one of said plurality of stations (A, B, C, D).

2. The method of claim 1, wherein said beacon includes a network identification, a network mode, a number of neighbor networks and a current schedule.

3. The method of claim 1, wherein said beacon (402) is equal to two periods of said cycle (404) of said powerline.

4. A device (CCo1) for coordinating transmissions by a plurality of network devices (A, B, C, D) in a centrally coordinated powerline network (202, 210, 212, 220), said device comprising:
a configuring unit to configure said device to be a central coordinator capable of generating beacons, wherein said beacons define beacon periods (402) beginning at pre-defined phases of a powerline cycle (404) and contain at least transmission schedules for at least said beacon periods (402); and
a beacon transmitter (310) to transmit said beacons to said plurality of network devices (A, B, C, D);
wherein said transmission schedules contain allocations fixed in phase relative to the powerline cycle (404);
and **characterized in that** said beacon transmissions include a persistent schedule (412, 416) valid for a current beacon period (402) and a number of subsequent beacon periods (402) defining the schedule of transmissions which said plurality of stations (A, B, C, D) follow, at least when one or more beacons of said subsequent beacon periods (402) are not received by at least one of said plurality of stations (A, B, C, D).

5. The device (CCo1) of claim 4, wherein said beacon includes a network identification, a network mode, a number of neighbor networks and a current schedule.

6. The method of claim 1 and wherein said transmitting comprises transmitting said beacons at said pre-defined phases.

7. The device (CCo1) of claim 4 and wherein said transmitter (310) transmits said beacons at said pre-defined phases.

## Patentansprüche

1. Verfahren zum Koordinieren von Sendungen auf einem zentral koordinierten Stromleitungsnetzwerk (202, 210, 212, 220), wobei das Verfahren aufweist:
Senden von Beacons durch einen zentralen Koordinator (CCo1, CCo2) an eine Vielzahl von Stationen (A, B, C, D), um Beacon-Perioden (402) zu definieren, die an vordefinierten Phasen eines Stromleitungszyklus (404) beginnen, wobei die Beacons mindestens Sendzeitpläne für mindestens die Beacon-Perioden (402) enthalten;
wobei die Sendzeitpläne Zuteilungen enthalten, die relativ zum Stromleitungszyklus (404) eine feste Phase aufweisen;
und **dadurch gekennzeichnet, dass** die Beacon-Sendungen einen ständigen Zeitplan (412, 416) aufweisen, der für eine gegenwärtige Beacon-Periode (402) und eine Anzahl von nachfolgenden Beacon-Perioden (402) gültig ist, der den Zeitplan von Sendungen definiert, dem die Vielzahl der Stationen (A, B, C, D) folgen, mindestens wenn einer oder mehrere Beacons der nachfolgenden Beacon-Perioden (402) durch mindestens eine der Vielzahl der Stationen (A, B, C, D) nicht empfangen werden.

2. Verfahren nach Anspruch 1, wobei der Beacon eine Netzwerkkennzeichnung, eine Netzwerkbetriebsart, eine Anzahl von Nachbarnetzwerken und einen gegenwärtigen Zeitplan aufweist.

3. Verfahren nach Anspruch 1, wobei die Beacon-Periode (402) gleich zwei Perioden des Zyklus (404) der Stromleitung ist.

4. Vorrichtung (CCo1) zum Koordinieren von Sendungen durch eine Vielzahl von Netzwerkvorrichtungen (A, B, C, D) in einem zentral koordinierten Stromleitungsnetzwerk (202, 210, 212, 220), wobei die Vorrichtung aufweist:
eine Konfigurationseinheit, um die Vorrichtung so zu konfigurieren, dass sie ein zentraler Koordinator ist, der zum Erzeugen von Beacons imstande ist, wobei die Beacons Beacon-Perioden (402) definieren, die an vordefinierten Phasen eines Stromleitungszyklus (404) beginnen und mindestens Sendzeitpläne für mindestens die Beacon-Perioden (402) enthalten; und
einen Beacon-Sender (310), um die Beacons an die Vielzahl der Netzwerkvorrichtungen (A, B, C, D) zu senden;
wobei die Sendzeitpläne Zuteilungen enthalten, die relativ zum Stromleitungszyklus (404) eine feste Phase aufweisen;
und **dadurch gekennzeichnet, dass** die Beacon-Sendungen einen ständigen Zeitplan (412, 416) aufweisen, der für eine gegenwärtige Beacon-Periode (402) und eine Anzahl von nachfolgenden Beacon-Perioden (402) gültig ist, der den Zeitplan von Sendungen definiert, dem die Vielzahl der Stationen (A, B, C, D) folgen, mindestens wenn einer oder mehrere Beacons der nachfolgenden Beacon-Perioden (402) durch mindestens eine der Vielzahl der Stationen (A, B, C, D) nicht empfangen werden.

5. Vorrichtung (CCo1) nach Anspruch 4, wobei der Beacon eine Netzwerkkennzeichnung, eine Netzwerkbetriebsart, eine Anzahl von Nachbarnetzwerken und einen gegenwärtigen Zeitplan aufweist.

6. Verfahren nach Anspruch 1, wobei das Senden das Senden der Beacons an vordefinierten Phasen aufweist.

7. Vorrichtung (CCo1) nach Anspruch 4, wobei der Sender (310) die Beacons an den vordefinierten Phasen sendet.

## Revendications

1. Procédé de coordination de transmissions dans un réseau courant porteur (202, 210, 212, 220) coordonné centralement, ledit procédé comprenant :
la transmission de balises d'un coordinateur central (CCo1, CCo2) à une pluralité de stations (A, B, C, D) pour définir des intervalles de balise (402) commençant à des phases définies d'un cycle de courant porteur (404), lesdites balises comprenant au moins des plans de transmission pour au moins les intervalles de balise (402) ;
lesdits plans de transmission comprenant des attributions fixées dans la phase relativement au cycle de courant porteur (404) ; et
**caractérisé en ce que** les transmissions de balises comprennent un plan persistant (412, 416) valide pour un intervalle de balise (402) actuel et un certain nombre d'intervalles de balise (402) suivants définissant le plan de transmissions suivi par la pluralité de stations (A, B, C, D), au moins si une ou plusieurs balises des intervalles de balise (402) suivants ne sont pas reçues par au moins une station de la pluralité de stations (A, B, C, D).

2. Procédé selon la revendication 1, où la balise comprend une identification de réseau, un mode de réseau, un nombre de réseaux voisins et un plan actuel.

3. Procédé selon la revendication 1, où l'intervalle de balise (402) est égal à deux intervalles du cycle (404) du courant porteur.

4. Dispositif (CCo1) pour la coordination de transmissions par une pluralité de dispositifs de réseau (A, B, C, D) dans un réseau courant porteur (202, 210, 212, 220) coordonné centralement, ledit dispositif comprenant :
une unité de configuration destinée à configurer le dispositif pour être un coordinateur central capable de générer des balises, les balises définissant des intervalles de balise (402) commençant à des phases définies d'un cycle de courant porteur (404) et comprenant au moins des plans de transmission pour au moins les intervalles de balise (402) ; et
un transmetteur de balises (310) destiné à transmettre les balises à la pluralité de dispositifs de réseau (A, B, C, D) ;
les plans de transmission comprenant des attributions fixées dans la phase relativement au cycle de courant porteur (404) ; et
**caractérisé en ce que** les transmissions de balises comprennent un plan persistant (412, 416) valide pour un intervalle de balise (402) actuel et un certain nombre d'intervalles de balise (402) suivants définissant le plan de transmissions suivi par la pluralité de stations (A, B, C, D), au moins si une ou plusieurs balises des intervalles de balise (402) suivants ne sont pas reçues par au moins une station de la pluralité de stations (A, B, C, D).

5. Dispositif (CCo1) selon la revendication 4, où la balise comprend une identification de réseau, un mode de réseau, un nombre de réseaux voisins et un plan actuel.

6. Procédé selon la revendication 1, où la transmission comprend la transmission des balises aux phases définies.

7. Dispositif (CCo1) selon la revendication 4, où le transmetteur (310) transmet les balises aux phases définies.
